(19) Europäisches Patentamt
European Patent Office
Office européen des brevets

(11) **EP 3 213 401 B1**

(12) # EUROPÄISCHE PATENTSCHRIFT

(45) Veröffentlichungstag und Bekanntmachung des Hinweises auf die Patenterteilung:
**10.05.2023 Patentblatt 2023/19**

(21) Anmeldenummer: **15775124.9**

(22) Anmeldetag: **18.09.2015**

(51) Internationale Patentklassifikation (IPC):
**H02P 29/024** (2016.01)    **H02P 3/22** (2006.01)
**B60L 7/00** (2006.01)

(52) Gemeinsame Patentklassifikation (CPC):
**B60L 7/003; H02P 3/22; H02P 29/0241;**
**Y02T 10/64**

(86) Internationale Anmeldenummer:
**PCT/EP2015/071427**

(87) Internationale Veröffentlichungsnummer:
**WO 2016/066330 (06.05.2016 Gazette 2016/18)**

(54) **VERFAHREN ZUM UMSCHALTEN EINES BETRIEBSZUSTANDS EINER ELEKTRISCHEN MASCHINE UND VORRICHTUNG ZUM UMSCHALTEN EINES BETRIEBSZUSTANDS EINER ELEKTRISCHEN MASCHINE**

METHOD FOR CHANGING AN OPERATING STATE OF AN ELECTRIC MOTOR AND DEVICE FOR CHANGING THE OPERATING STATE OF AN ELECTRIC MOTOR

PROCÉDÉ DE COMMUTATION D'UN ÉTAT DE FONCTIONNEMENT D'UNE MACHINE ÉLECTRIQUE ET DISPOSITIF DESTINÉ À COMMUTER UN ÉTAT DE FONCTIONNEMENT D'UNE MACHINE ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.10.2014 DE 102014222256**

(43) Veröffentlichungstag der Anmeldung:
**06.09.2017 Patentblatt 2017/36**

(73) Patentinhaber: **Robert Bosch GmbH**
**70442 Stuttgart (DE)**

(72) Erfinder:
- **HEIDRICH, Torsten**
  **71665 Vaihingen/Enz (DE)**
- **GROSSMANN, Ekard**
  **70569 Stuttgart (DE)**
- **ABELE, Marcus**
  **71701 Schwieberdingen (DE)**

(56) Entgegenhaltungen:
**DE-A1-102011 017 712     DE-A1-102011 086 079**
**DE-A1-102012 101 508**

**Beschreibung**

Die vorliegende Erfindung betrifft ein Verfahren und eine Vorrichtung zum Umschalten aus dem Freilauf - Betriebszustand einer elektrischen Maschine in den Kurzschluss - Betriebszustand.

Ferner betrifft die Erfindung einen Stromrichter sowie ein elektrisch angetriebenes Kraftfahrzeug mit einer Vorrichtung zum Umschalten aus dem Freilauf-Betriebszustand einer elektrischen Maschine in den Kurzschluss - Betriebszustand.

**Stand der Technik**

Elektrische Maschinen, wie beispielsweise permanent erregte Synchronmaschinen, finden in zahlreichen technischen Bereichen Einsatz. Beispielsweise werden solche permanent erregten Synchronmaschinen in Kraftfahrzeugen eingesetzt.

Aus Sicherheitsgründen müssen dabei Vorkehrungen für einen sicheren Betriebszustand im Fehlerfall getroffen werden. Eine Möglichkeit für einen sicheren Betriebszustand ist beispielsweise der sogenannte aktive Kurzschluss. Dabei werden mittels geeigneter Schaltelemente die Phasenanschlüsse der elektrischen Maschine gleichzeitig kurzgeschlossen. Ein weiterer sicherer Betriebszustand ist der sogenannte Freilauf. Dabei werden alle Anschlüsse der elektrischen Maschine voneinander getrennt und es erfolgt keine aktive Ansteuerung der elektrischen Maschine mit einer Spannung.

Die Deutsche Patentanmeldung DE 10 2011 081 173 A1 offenbart eine Vorrichtung und ein Verfahren zum Einstellen von Betriebszuständen eines Wechselrich-Neue Seite 2, 2a (Korrekturfassung) ters der eine elektrische Maschine ansteuert. Dabei kann abhängig von der Drehzahl der elektrischen Maschine mittels des Wechselrichters in einen Freilauf oder einen aktiven Kurzschluss geschaltet werden.

Aus der DE 10 2011 086 079 A1 ist ein Verfahren und eine Vorrichtung zur Ansteuerung einer elektrischen Maschine mittels eines Wechselrichters in einem Fahrzeug bekannt, wobei die elektrische Maschine in einen Freilaufbetrieb und anschließend in einen Kurzschlussbetrieb umgeschaltet wird und umgekehrt in Abhängigkeit eines Phasenstroms.

Aus der DE 10 2011 017 712 A1 ist ein Verfahren und eine Vorrichtung zur Ansteuerung eines Wechselrichters bekannt, wobei eine Schutzschaltung und eine Signalverzögerungseinrichtung vorgesehen sind zur Verriegelung zweier komplementärer Schalteinrichtungen eines Brückenzweigs des Wechselrichters.

Aus der DE 10 2012 101508 A1 ist ein Verfahren zum Kurzschließen einer permanenterregten Synchronmaschine bekannt,

Während des Freilauf - Betriebszustandes einer elektrischen Maschine steigt die induzierte Spannung mit steigender Drehzahl stetig an. Beim Schließen der Leistungsschalter des Inverters, um aus dem Freilauf - Betriebszustands in den Kurzschluss - Betriebszustand zu wechseln, treten hohe Überspannungen und/oder Überströme zwischen dem Inverter und der elektrischen Maschine in den einzelnen Phasen auf. Diese können zu einer Schädigung oder Zerstörung der Bauteile des Inverters oder der an den Ein- und Ausgängen angeschlossenen Komponenten führen.

Es besteht daher ein Bedarf nach einem Verfahren und einer Vorrichtung, bei denen das Umschalten, der Übergang oder der Wechsel des Betriebszustands von Freilauf in den aktiven Kurzschluss so ausgeführt wird, dass die Überspannungen und/oder Überströme an und in dem Inverter sowie in der elektrischen Maschine minimiert werden.

**Offenbarung der Erfindung**

Die Erfindung wird durch die Merkmale der unabhängigen Ansprüche definiert.

**Vorteile der Erfindung**

Eine Idee, die der vorliegenden Erfindung zugrunde liegt, besteht darin, dass der Übergang vom Freilauf - Betriebszustand in den Kurzschluss-Betriebszustand über einen Zwischenzustand, bei dem zunächst lediglich zwei Phasen leitend miteinander verbunden sind, erfolgt. Es findet somit ein Übergang aus dem Freilauf-Betriebszustand, über einen Zwischenzustand, den teil-phasigen Kurzschluss, in den all-phasigen Kurzschluss statt. Im Freilauf-Betriebszustand liegt keine geschlossene leitende Verbindung zwischen den drei Phasenanschlüssen der elektrischen Maschine vor. Im teil-phasigen Kurzschluss sind lediglich zwei der drei Phasenanschlüsse der elektrischen Maschine leitend miteinander verbunden, also kurz geschlossen. Im all-phasigen Kurzschluss sind alle drei Phasenanschlüsse leitend miteinander verbunden, also kurz geschlossen. Insbesondere in der vorliegenden Anwendung wird der Freilauf über einen 2-phasigen Kurzschluss in den 3-phasigen Kurzschluss umgeschaltet.

Durch das Kurzschließen von zweien der drei Phasen ergibt sich ein geschlossenes schwingendes zweiphasiges System. Die Zeitpunkte des Schließens der einzelnen Schaltelemente werden in Abhängigkeit von mindestens einem Ansteuerparameter der elektrischen Maschine vorgegeben. Zur Bildung eines zweiphasigen Systems aus der zweiten und dritten Phase wird zum Schließen des dritten Schaltelements in der dritten Phase beispielsweise ein Zeitpunkt gewählt, zu dem durch die erste Phase des dreiphasigen Systems kein Strom fließt, da die zugehörige Freilaufdiode zu diesem Zeitpunkt sperrt. Durch Schließen des dritten Schaltelements in der dritten Phase und wenn ein Stromfluss durch die zweite Freilaufdiode der zweiten Phase zu diesem Zeitpunkt möglich ist, wird ein Stromfluss in der dritten und der zweiten Phase ermöglicht. Ein teilphasiger Kurzschluss in Phase zwei und drei liegt vor. Der Strom fließt nun in der Phase drei durch den geschlossenen Schalter und in Phase zwei durch die Freilaufdiode, die insbesondere das noch geöffnete zweite Schaltelement überbrückt. Bei diesem teilphasigen Kurzschließen entstehen weder Überspannungen noch Überströme, beziehungsweise werden diese minimiert.

Im Folgenden wird das Umschalten aus dem teilphasigen Kurzschluss in den allphasigen Kurzschluss beschrieben. Hierzu ist das erste Schaltelement in der ersten Phase zu schließen. Dieses wird zu einem Zeitpunkt geschlossen, bei dem eine nahezu maximale Spannung am geöffneten ersten Schalter anliegt, so dass durch das Schließen des Schaltelements ein Stromfluss verursacht wird, der im Idealfall dem stationär eingeschwungenen Stromfluss entspricht. Dies ist dann der Fall, wenn die Spannung über der Impedanz der ersten Phase bzw. die Spannung über dem ersten Schalter möglichst maximal ist.

Das zweite Schaltelement in der Phase zwei wird innerhalb des Zeitraums geschlossen, während dem der Strom über die Freilaufdiode in der der Phase zwei fließt. Ein paralleles Schließen des Schaltelements verursacht somit keine Änderung des Stromflusses in der Phase zwei.

Somit entstehen sowohl beim Kurzschließen des ersten als auch des zweiten Schaltelements in den Phasen eins und zwei wiederum keine Überspannungen noch Überströme, beziehungsweise werden diese minimiert.

Daher wird mittels dieser Schaltabfolge ein Übergang von einem Freilauf-Betriebszustand zu einem Kurzschluss - Betriebszustand geschaffen, bei dem keine sonst üblichen Überspannungen bzw. Überströme entstehen, da die Zeitpunkte des Schließens der einzelnen Schaltelemente der einzelnen Phasen so in Abhängigkeit von mindestens einem Ansteuerparameter der elektrischen Maschine vorgegeben werden, dass idealerweise beim Schließen möglichst die maximale Spannung über den entsprechenden Impedanzen anliegt.

Somit wird eine Möglichkeit für ein Umschalten aus dem Freilauf - Betriebszustand in den Kurzschluss -Betriebszustand einer elektrischen Maschine zur Verfügung gestellt, welches keine Zerstörungen oder Beschädigungen an den Bauelementen verursacht.

In einer weiteren Ausführung der Erfindung ist als Ansteuerparameter der elektrischen Maschine insbesondere ein Wert oder ein Verlauf einer elektrischen Spannung der elektrischen Maschine, also beispielsweise eine induzierte Sternspannung, eine Ständer-Strangspannung, eine Polradspannung, eine Leiter-Leiterspannung, eine Spannung über der Impedanz einer Phase der elektrischen Maschine, eine Spannung über einem Leistungsschalter einer Phase der elektrischen Maschine, oder eine Spannung über einer Freilaufdiode einer Phase der elektrischen Maschine zu verstehen. Als Ansteuerparameter der elektrischen Maschine ist insbesondere auch ein Wert oder ein Verlauf eines Rotorwinkels des Rotors der elektrischen Maschine, beispielsweise ein entsprechendes Resolversignal oder ein anderer Parameter zu verstehen, anhand dessen auf einen Wert oder einen Verlauf einer elektrischen Spannung der elektrischen Maschine oder auf den Rotorwinkel des Rotors einer elektrischen Maschine geschlossen werden kann.

Nur bei Kenntnis wenigstens eines der genannten Ansteuerparameter der elektrischen Maschine lassen sich die verschiedenen, mindestens teilweise nacheinander liegenden Zeitpunkte zum Schließen der Schaltelemente ermitteln und so vorgeben, dass bei einem Kurzschließen der elektrischen Maschine keine Überspannungen und Überströme entstehen, beziehungsweise diese minimiert werden können. Beispielsweise wird in Abhängigkeit des Rotorwinkels der Zeitabschnitt oder ein Zeitpunkt bestimmt, während denen in der ersten Phase kein Strom aufgrund der momentan sperrenden Freilaufdiode dieser Phase fließt. Die dritte Phase wird durch Schließen des dritten Schaltelements während dieses Zeitabschnitts kurz geschlossen. Vorteilhaft entstehen so beim Kurzschließen der dritten Phase weder Überspannungen noch Überströme, beziehungsweise werden diese minimiert.

In einer weiteren Ausführung der Erfindung wird das dritte Schaltelement zu einem ersten Zeitpunkt geschlossen, zudem der Ansteuerparameter einem Wert entspricht, der mit einem Rotorwinkel aus dem Bereich von 270° bis 90°, insbesondere 320° bis 40°, korrespondiert oder insbesondere mit einem Rotorwinkel von 0° korrespondiert.

Wenn der Rotorwinkel einem Wert aus dem Bereich 270° bis 90°, insbesondere 320° bis 40°, entspricht oder insbesondere 0° beträgt, fließt in der ersten Phase nahezu beziehungsweise kein Strom durch die momentan sperrende Freilaufdiode dieser Phase. Die dritte Phase wird durch Schließen des zugehörigen dritten Schaltelementes während dieses Zeitabschnitts kurz geschlossen.

Vorteilhaft entstehen so beim Kurzschließen der dritten Phase weder Überspannungen noch Überströme, beziehungsweise werden diese minimiert

In einer weiteren Ausführung der Erfindung wird das zweite Schaltelement zu einem zweiten Zeitpunkt geschlossen, zudem der Ansteuerparameter einem Wert entspricht, der mit einem Rotorwinkel aus dem Bereich von 270° bis 180°, insbesondere 320° bis 130°, korrespondiert oder insbesondere mit einem Rotorwinkel aus dem Bereich von 0° bis 90° korrespondiert.

Wenn der Rotorwinkel einem Wert aus dem Bereich von 270° bis 180°, insbesondere 320° bis 130°, oder insbesondere von 0° bis 90° entspricht, fließt in der zweiten Phase Strom durch die Freilaufdiode dieser Phase. Mit Schließen des zweiten Schaltelements parallel zur momentan leitenden Freilaufdiode, wird die zweite Phase durch Schließen des zugehörigen zweiten Schaltelementes dauerhaft kurz geschlossen. Der Stromfluss durch Phase zwei wird zu einem Zeitpunkt innerhalb des Bereichs, indem der Rotorwinkel einem Wert aus dem Bereich von 270° bis 180°, insbesondere 320° bis 130°, oder insbesondere von 0° bis 90° entspricht, aufgrund der parallelen Stromleitung durch die Freilaufdiode durch das Schließen des zweiten Schaltelementes nicht beeinflusst. Vorteilhaft entstehen so beim Kurzschließen der zweiten Phase weder Überspannungen noch Überströme, beziehungsweise werden diese minimiert.

In einer weiteren Ausführung der Erfindung wird das erste Schaltelement zu einem dritten Zeitpunkt geschlossen, zudem der Ansteuerparameter einem Wert entspricht, der mit einem Rotorwinkel aus dem Bereich von 0° bis 180°, insbesondere 50° bis 130°, korrespondiert oder insbesondere mit einem Rotorwinkel von 90° korrespondiert.

Wenn der Rotorwinkel einem Wert aus dem Bereich 0° bis 180°, insbesondere 50° bis 130°, entspricht oder insbesondere 90° beträgt, ist die induzierte Sternspannung der ersten Phase groß beziehungsweise maximal. Zu diesem Zeitpunkt ist der Strom durch die Phase gering beziehungsweise minimal. Dies ist somit der der optimale Zeitpunkt zum Schließen des ersten Schaltelementes, da kein Stromfluss durch das Zuschalten beeinträchtigt wird.

Vorteilhaft entstehen so beim Kurzschließen der zweiten Phase weder Überspannungen noch Überströme, beziehungsweise werden diese minimiert.

In einer weiteren Ausführung der Erfindung wird das zweite Schaltelement zu einem zweiten Zeitpunkt geschlossen, der mit dem ersten Zeitpunkt oder mit dem dritten Zeitpunkt übereinstimmt.

Da das zweite Schaltelement innerhalb eines Bereiches geschlossen werden kann, der die Schaltzeitpunkte des dritten und ersten Schaltelementes umfasst, bietet es sich an, das zweite Schaltelement mit einem der anderen gleichzeitig zu schließen, insbesondere können somit zwei Schaltelemente mittels einem Ansteuersignal angesteuert werden. Vorteilhaft wird damit die Ansteuerung vereinfacht und der Ressourcenaufwand in der Steuerung minimiert.

In einer weiteren Ausführungsform der Erfindung wird bei der Vorgabe der Zeitpunkte, bei denen das jeweilige Schaltelement oder die Schaltelemente geschlossen werden, ein Wirkfaktor (cos phi) des elektrischen Antriebs beziehungsweise der elektrischen Maschine berücksichtigt.

Insbesondere wird der aus dem Wirkfaktor resultierende, antriebsspezifische und alterungsabhängige Phasenverschiebungswinkel entsprechend aufaddiert auf die jeweiligen vorgegebenen Rotorwinkel und die Zeitbereiche oder Zeitpunkte zum Schließend der einzelnen Schaltelemente entsprechend angepasst, an denen das Schließen der jeweiligen Schaltelemente erfolgt.

Vorteilhaft wird somit sichergestellt, dass beim Kurzschließen der einzelnen Phasen der Wirkfaktor berücksichtigt wird und daher keine Überspannungen oder Überströme entstehen beziehungsweise diese minimiert werden.

Es versteht sich, dass die Merkmale, Eigenschaften und Vorteile des erfindungsgemäßen Verfahrens entsprechend auf die erfindungsgemäße Vorrichtung beziehungsweise auf den Stromrichter und das elektrische angetriebene Kraftfahrzeug und umgekehrt zutreffen beziehungsweise anwendbar sind.

Weitere Merkmale und Vorteile von Ausführungsformen der Erfindung ergeben sich aus der nachfolgenden Beschreibung mit Bezug auf die beigefügten Zeichnungen.

**Kurze Beschreibung der Zeichnungen**

Im Folgenden soll die Erfindung anhand einiger Figuren näher erläutert werden. Dazu zeigen:

Fig.1: eine schematische Darstellung einer Stromrichteranordnung zum Betreiben einer elektrischen Maschine;

Fig. 2: eine schematische Darstellung einer Vorrichtung zum Betriebszustandswechsel einer elektrischen Maschine gemäß einem Ausführungsbeispiel;

Fig. 3: zeigt schematisch einen idealen Verlauf der induzierten Sternspannungen und der Leiterspannungen über dem Rotorwinkel der elektrischen Maschine;

Fig. 4: zeigt eine schematische Darstellung eines Ablaufdiagramms für ein Verfahren, wie es einem Ausführungsbeispiel der vorliegenden Erfindung zugrunde liegt.

In den Figuren sind gleich oder gleich wirkende Funktionen oder Funktionsmerkmale und Komponente, sofern nicht anders ausgeführt, jeweils mit denselben Bezugszeichen versehen. Es versteht sich, dass Komponenten und Elemente in den Zeichnungen aus Gründen der Übersichtlichkeit nicht notwendigerweise maßstabsgetreu wiedergegeben sind.

**Ausführungsformen der Erfindung**

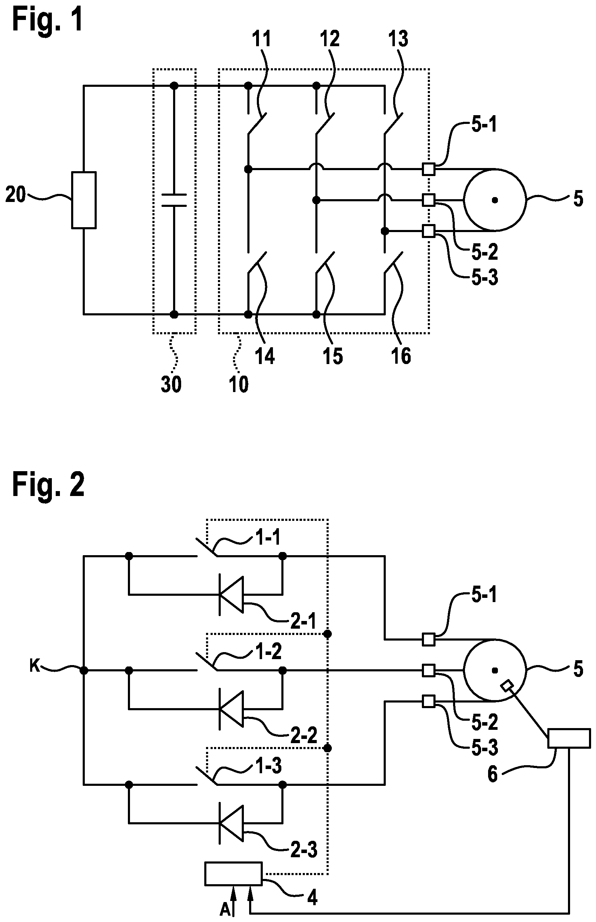

Figur 1 zeigt eine schematische Darstellung einer Stromrichteranordnung zum Betreiben einer elektrischen Maschine 5. Die Stromrichteranordnung umfasst eine Energiequelle 20, wie zum Beispiel eine Traktionsbatterie eines elektrisch angetriebenen Kraftfahrzeugs, einen Gleichspannungszwischenkreis 30, welcher insbesondere einen Zwischenkreiskondensator aufweist, und einen Stromrichter 10. Die elektrische Maschine 5 kann beispielsweise ein Synchronmotor bzw. eine Synchronmaschine sein.

Der Gleichspannungszwischenkreis 30 kann dabei parallel zu den Ausgängen der elektrischen Energiequelle 20 angeordnet sein. An den Ausgangsanschlüssen des Gleichspannungszwischenkreises 30 kann ein Stromrichter 10, beispielsweise eine Pulswechselrichterschaltung oder ein Inverter, angeschlossen sein. Der Stromrichter 10 ist im vorliegenden Beispiel als Vollbrückenschaltung oder B6-Brücke ausgelegt. Dazu umfasst die Stromrichterschaltung 10 obere Halbbrückenzweige mit den Schaltelementen 11, 12, 13 und untere Halbbrückenzweige mit den Schaltelementen 14, 15, 16. Die Schaltelemente 11-16 können beispielsweise Leistungshalbleiterschalter aufweisen. Insbesondere können die Schaltelemente 11-16 beispielsweise Feldeffekttransistoren wie MOSFET, oder bipolare Transistoren mit einem isolierten Gate (IGBT) aufweisen.

Der Stromrichter 10 kann durch entsprechende Ansteuerung der Schaltelemente 11-16 eine dreiphasige Wechselspannung zur Ansteuerung der elektrischen Maschine 5 erzeugen. Hierzu wird an den Phasenanschlüssen 5-1, 5-2 und 5-3 der elektrischen Maschine 5 mittels des Stromrichters 10 jeweils eine entsprechende Phasenspannung erzeugt.

Während des normalen Regelbetriebs kann auf diese Weise eine elektrische Drehspannung an der elektrischen Maschine 5 bereitgestellt werden. Darüber hinaus kann beispielsweise durch Schließen der oberen drei Schaltelemente 11-13 beziehungsweise durch Schließen der unteren drei Schaltelemente 14-16 an der elektrischen Maschine 5 der sichere Betriebszustand eines aktiven Kurzschlusses eingestellt werden. Ferner ist auch ein weiterer sicherer Betriebszustand in Form eines Freilaufmodus möglich, bei dem keine Spannung an den Phasenanschlüssen 5-1 bis 5-3 der elektrischen Maschine 5 angelegt wird und darüber hinaus die Phasenanschlüsse 5-1 bis 5-3 der elektrischen Maschine 5 elektrisch gegeneinander isoliert sind. Hierbei sind alle sechs Schaltelemente 11-16 geöffnet.

Figur 2 zeigt eine schematische Darstellung einer Vorrichtung zum Betriebszustandswechsel einer elektrischen Maschine 5, wie sie einer Ausführungsform der vorliegenden Erfindung zugrunde liegt. Die elektrische Maschine 5 weist dabei beispielsweise drei Phasenanschlüsse 5-1, 5-2 und 5-3 auf. Der erste Phasenanschluss 5-1 ist über ein erstes Schaltelement 1-1 mit einem Knotenpunkt K verbunden. Parallel zu dem ersten Schaltelement 1-1 ist eine erste Freilaufdiode 2-1 angeordnet. Der zweite Phasenanschluss 5-2 ist über ein zweites Schaltelement 1-2 ebenfalls mit dem Knotenpunkt K verbunden. Parallel zu dem zweiten Schaltelement 1-2 ist eine zweite Freilaufdiode 2-2 angeordnet. Der dritte Phasenanschluss 5-3 ist über ein drittes Schaltelement 1-3 mit dem Knotenpunkt K verbunden. Parallel zu dem dritten Schaltelement 1-3 ist eine dritte Freilaufdiode 2-3 angeordnet. Bei den drei Schaltelementen 1-1 bis 1-3 kann es sich beispielsweise um die oberen drei Schaltelemente 11-13 des Stromrichters 10 aus Figur 1 handeln. Ebenso kann es sich bei den drei Schaltelementen 1-1 bis 1-3 um die unteren drei Schaltelemente 14-16 des Stromrichters 10 aus Figur 1 handeln. Der Knotenpunkt K entspricht dabei entweder dem positiven oder dem negativen Anschlusspunkt des Gleichspannungszwischenkreis 30 beziehungsweise der elektrischen Energiequelle 20.

Ein Rotorwinkelgeber 6 kann am Rotor der elektrischen Maschine angeordnet sein und bestimmt die aktuelle Lage des Rotors, also den Rotorwinkel der elektrischen Maschine. Alternativ kann mittels einer gemessenen Phasenspannung oder mittels eines gemessenen Phasenstroms oder mittels einer anderen Sensoreinrichtung der aktuelle Rotorwinkel bestimmt werden. Der Rotorwinkelgeber 6 oder die alternative Sensoreinrichtung kann ferner mit einer Ansteuervorrichtung 4 verbunden sein. Diese Ansteuervorrichtung 4 kann darüber hinaus einen Eingang aufweisen, der dazu ausgelegt ist, eine Anforderung A für ein Umschalten des Betriebszustands in den Kurzschluss- Betriebszustand der elektrischen Maschine 5 zu empfangen.

Nachdem die Ansteuervorrichtung 4 eine Anforderung A zum Umschalten in den Kurzschluss- Betriebszustand der elektrischen Maschine 5 empfangen hat, wertet die Ansteuervorrichtung 4 die von dem Rotorwinkelgeber 6 oder der alternativen Sensoreinrichtung ermittelten Signale aus.

In Abhängigkeit dieser ermittelten Signale erzeugt die Ansteuervorrichtung 4 darauf Steuersignale zum zumindest teilweise nacheinander Schließen der Schaltelemente 1-2, 1-3 und 1-1. Nachdem alle drei Schaltelemente 1-1 bis 1-3 in Abhängigkeit von der Ansteuervorrichtung 4 ausgegebenen Steuersignalen geschlossen worden sind, befindet sich die elektrischen Maschine 5 im sicheren Betriebszustand des aktiven Kurzschluss.

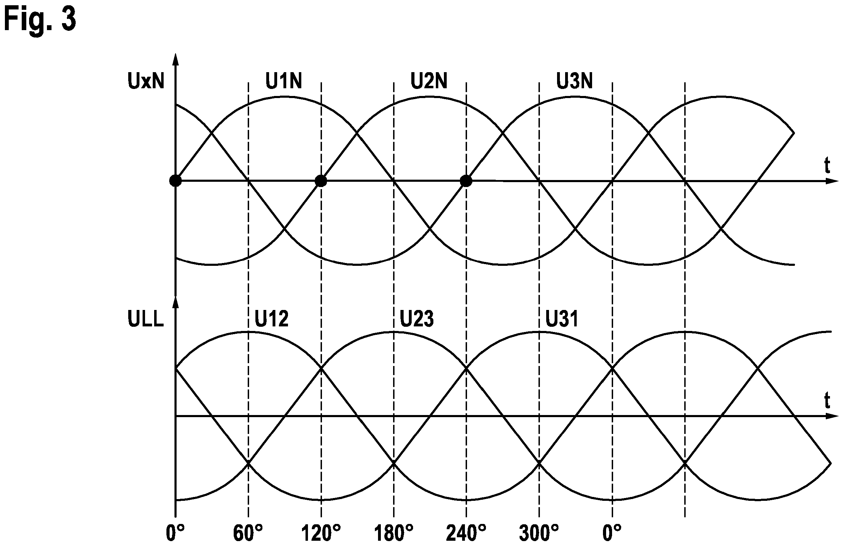

Figur 3 zeigt eine schematische, idealisierte Darstellung der sinusförmigen, phasenverschobenen Spannungsverläufe der induzierten Sternspannungen UxN, also U1N, U2N, U3N der drei Phasen der elektrischen Maschine sowie die Spannungsverläufe der Leiterleiterspannungen ULL, also U12, U23, U31 der Phasen untereinander über dem Rotorwinkel von 0 .. 360° der elektrischen Maschine und insbesondere der Zeit t.

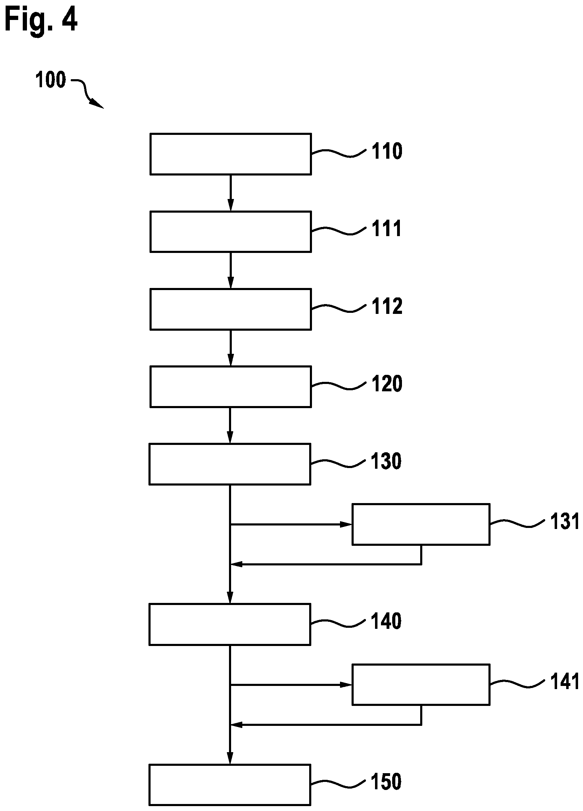

Figur 4 zeigt eine schematische Darstellung eines Ablaufdiagramms für ein Verfahren 100 zum Umschalten aus dem Freilauf - Betriebszustand einer elektrischen Maschine 5 in einen Kurzschluss - Betriebszustand, wie es einer Ausführungsform der vorliegenden Erfindung zugrunde liegt. Das Verfahren 100 zum Umschalten aus dem Freilauf - Betriebszustand in einen Kurzschluss - Betriebszustand stellt dabei zunächst in einem ersten Schritt 110 ein erstes Schaltelement 1-1 mit einer ersten Freilaufdiode 2-1 zwischen einem ersten Phasenanschluss 5-1 der elektrischen Maschine 5 und einem Knotenpunkt K bereit. In einem weiteren Schritt 111 wird ein zweites Schaltelement 1-2 mit einer zweiten Freilaufdiode 2-2 zwischen einem zweiten Phasenanschluss 5-2 der elektrischen Maschine 5 und dem Knotenpunkt K bereitgestellt. Weiterhin wird in einem Schritt 112 ein drittes Schaltelement 1-3 mit einer dritten Freilaufdiode 2-3 zwischen einem dritten Phasenanschluss 5-3 der elektrischen Maschine 5 und dem Knotenpunkt K bereitgestellt.

Soll die elektrische Maschine 5 aus einem Freilauf - Betriebszustand in einen Kurzschluss - Betriebszustand überführt werden, so kann in Schritt 120 eine Anforderung für ein Umschalten des Betriebszustands der elektrischen Maschine 5 in den Kurzschluss-Betriebszustand empfangen werden. Beispielsweise kann diese Anforderung für das Umschalten des Betriebszustands der elektrischen Maschine 5 in den Kurzschluss - Betriebszustand durch die im Zusammenhang mit Figur 2 beschriebene Ansteuervorrichtung 4 erfolgen. Die Ansteuervorrichtung 4 steuert dabei die in diesem und/oder den nachfolgenden Ausführungsformen beschriebenen Verfahrensschritte.

In einem Schritt 130 kann mittels einer Sensoreinrichtung, insbesondere mittels eines Rotorwinkelgebers 6, der Rotorwinkel der elektrischen Maschine 5 bestimmt werden. Die Informationen beziehungsweise Signale der Sensoreinrichtungen zur Messung der der ersten elektrischen Phasenspannung, des Phasenstroms und/ oder des Rotorwinkels können an der Ansteuervorrichtung 4 bereitgestellt werden.

Die Ansteuervorrichtung 4 steuert mittels eines Ansteuersignal das Schließen des dritten Schaltelementes 1-3 zu einem Zeitpunkt an, zu dem sich der Rotor in einer Position befindet, also der Rotorwinkel einem Wert entspricht, bei dem eine erste Induzierte Sternspannung U1N ansteigend aus dem negativen in den positiven Spannungsbereich wechselt, beziehungsweise den Nulldurchgang passiert. Dieser Zusammenhang zwischen dem Rotorwinkel und dem Spannungsverlauf oder Stromverlauf ist antriebsspezifisch und lässt sich anhand eines Antriebsmodells physikalisch berechnen oder ausmessen.

In Schritt 140 steuert die Ansteuervorrichtung 4 mittels eines Ansteuersignal das Schließen des zweiten Schaltelements 1-2 in Abhängigkeit der Signale der Sensoreinrichtungen zur Messung der der ersten elektrischen Phasenspannung, des Phasenstroms und/ oder des Rotorwinkels an.

In Schritt 150 steuert die Ansteuervorrichtung 4 mittels eines Ansteuersignal das Schlie-ßen des ersten Schaltelements 1-1 in Abhängigkeit der Signale der Sensoreinrichtungen zur Messung der der ersten elektrischen Phasenspannung, des Phasenstroms und/ oder des Rotorwinkels an. Das erste Schaltelement 1-1 wird geschlossen, wenn das Signal einem Wert entspricht, der einem Rotorwinkel zwischen 0 und 180°, insbesondere 50° und 130°, entspricht. Je größer die Abweichung des Schaltzeitpunktes des ersten Schaltelementes 1-1 von dem Zeitpunkt ist, zudem der Rotorwinkel den Wert 90° beträgt, desto stärkere Strom- und Spannungsüberschwinger treten auf. Je geringer die Abweichung des Schaltzeitpunktes von dem Zeitpunkt ist, zudem der Rotorwinkel den Wert 90° beträgt, desto geringere Strom- und Spannungsüberschwinger treten auf.

Mit diesem Verfahren werden somit alle Schaltelemente 1-1 bis 1-3 nicht gleichzeitig, sondern zu mindestens zwei nacheinander liegenden Zeitpunkten nacheinander geschlossen, so dass es zu keiner signifikanten Spannungs- oder Stromüberhöhung kommt.

In einer weiteren Ausführungsform kann ein zusätzlicher Schritt 131 und/ oder 141 bei der Ermittlung der vorzugebenden Zeitpunkte zum Schließen der einzelnen Schaltelemente vorgesehen sein. Bei der Ermittlung der unterschiedlichen Zeitpunkte an denen die entsprechenden Rotorwinkel vorliegen, zu denen das jeweilige Schaltelement oder die Schaltelemente geschlossen werden soll, wird der Wirkfaktor des elektrischen Antriebs beziehungsweise der elektrischen Maschine berücksichtigt. Insbesondere wird der aus dem Wirkfaktor resultierende Phasenverschiebungswinkel entsprechend aufaddiert auf die jeweiligen vorgegebenen Werte des Rotorwinkels, an denen das Schließen der jeweiligen Schaltelemente erfolgen soll.

Betrachtet man ein ideales System und vernachlässigt man die ohmschen Verluste einer elektrischen Maschine ergeben sich folgende Zusammenhänge. Die elektrische Maschine wird als eine rein induktive Last betrachtet. Somit eilt der Stromverlauf durch die Impedanz der elektrischen Maschine um 90° dem Spannungsverlauf hinterher. Somit ergibt sich zu dem Zeitpunkt, zu dem der Betrag der Spannung über der Impedanz einer Phase maximal ist, ein Nulldurchgang des Stroms durch die Impedanz und somit durch diese Phase. Dies ist der optimale Zeitpunkt zum Schließen des Schaltelementes dieser Phase, da kein Stromfluss durch das Zuschalten beeinträchtigt wird.

Zum Start eines zweiphasigen Systems, beispielsweise mit dritter und zweiter Phase, ergeben sich hierzu zwei Bedingungen: Damit die zweite Freilaufdiode 2-2 Strom führen kann, muss die anliegende Spannung negativ sein. Hierzu muss die Leiterleiterspannung U23 negativ sein. Gemäß dem in Figur 3 dargestellten Leiterleiterspannungsverlauf ist diese erste Bedingung erfüllt, wenn der Rotorwinkel einem Wert zwischen 270° und 90° erfüllt. Die zweite Bedingung ist, dass über die Freilaufdiode 2-1 kein Strom fließt, da ja zunächst ein zweiphasiges System, beispielsweise bestehend aus zweiter und dritter Phase, geschaffen werden soll. Hierzu muss erfüllt sein, dass die Spannung US1 über dem Schaltelement 1-1 ebenfalls kleiner Null ist.

Hierzu gilt:

$$US1=US3-UZ3+U3N-U1N+UZ1 < 0 \qquad (1)$$

Mit der Annahme, dass das Schaltelement 1-3 als erstes geschlossen wird, ist US3 = 0. Die Spannung UZ1 über der Impedanz der Phase 1 ist ebenfalls Null, da in der Phase eins beim Start des zweiphasigen Systems aus zweiter und dritter Phase kein Strom fließt. Unter der weiteren Annahme, dass die Impedanzen der drei Phasen gleich groß sind, teilt sich die Spannung im zweiphasigen System gleichmäßig auf die Impedanzen UZ2 und UZ3 der Phasen auf. Aus Gleichung (1) ergibt sich somit:

$$US1=0 - 0,5(U3N-U2N) +U3N-U1N +0 = 0,5 \; U23+U31 <0 \qquad (2)$$

Gemäß dem in Figur 3 dargestellten Leiterleiterspannungsverlaufs ist diese zweite Bedingung zwischen 0° und 90° erfüllt.

Somit ergibt sich beispielsweise als optimaler Zeitpunkt für das Schließen des dritten Schaltelementes 1-3 der Rotorlagewinkel von 0° oder der positive Nulldurchgang der induzierten Sternspannung U1N der Phase eins, also wenn der Verlauf der induzierten Sternspannung U1N aus dem negativen Spannungsbereich in den positiven Spannungsbereich übertritt.

Für den weiteren Schritt, dass der Stromfluss in den stationären eingeschwungenen dreiphasigen Verlauf übergeht, ist ein Schließen des Schaltelementes 1-1 notwendig. Dies soll vor dem Zeitpunkt erfolgen, zudem die Freilaufdiode 2-1 selbsttätig leitend würde, wenn eine entsprechende Spannung anliegen würde. Der günstige Zeitpunkt ergibt sich somit erneut wenn der Betrag der Spannung UZ1 über der Impedanz der Phase maximal ist. Dann liegt wiederum ein Nulldurchgang des Stroms durch die Impedanz und somit durch die erste Phase vor. Dies ist der optimale Zeitpunkt zum Zuschalten, da kein Stromfluss durch das Zuschalten beeinträchtigt wird.

Dabei gilt, dass zum Zeitpunkt des Zuschaltens des Schaltelementes 1-1 die am Schaltelement 1-1 anliegende Spannung US1 auf die an der Impedanz der Phase eins anliegende Spannung UZ1überspringt. Es gilt somit:

$$UZ1=-US1 \qquad (3)$$

Da UZ1 maximal sein soll folgt, dass US1 minimal sein wird. Unter Berücksichtigung der Gleichung (2) ergibt sich

$$US1=0,5*U23+U31 = Minimum \qquad (4)$$

Dies wird bei 90° erreicht, wie auch aus dem in der Figur 3 dargestellten Leiterleiterspannungsverlaufs ersichtlich ist. Versuche haben ergeben, dass ein Zuschalten des ersten Schaltelementes 1-1 auch in einem Bereich von 0 bis 180° möglich ist. Abweichungen von dem idealen Zeitpunkt führen jedoch zu Strom- und Spannungsüberschwingern.

Das Schaltelement 1-2 muss spätestens dann geschlossen werden, wenn die Freilaufdiode 2-2 den Strom nicht mehr leiten würde. Abweichend von diesem optimalen Zeitpunkt kann insbesondere das Schaltelement 1-2 auch noch kurze Zeit später geschlossen werden. Technisch vereinfachend ist, das zweite Schaltelement 1-2 gleichzeitig mit dem dritten Schaltelement 1-3 oder gleichzeitig mit dem ersten Schaltelement 1-1 anzusteuern und zu schließen.

Obige Erläuterungen beruhen auf einer theoretischen Betrachtung, bei der angenommen wurde, dass die elektrische Maschine eine reine induktive Last wäre. Da in der Realität die Impedanz der elektrischen Maschine auch ohmsche Anteile aufweist, ergeben sich aus Berechnungen und Versuchen optimale Zeitpunkte oder Rotorwinkel zum Zuschalten der Schaltelemente. Für die Schaffung des zweiphasigen Systems ist ein Zeitpunkt zum Schließen des dritten Schaltelementes geeignet, bei dem der Rotorwinkel beispielsweise 165° beträgt. Für die Schaffung des dreiphasigen Systems, oder des Kurzschlusses, ist ein Zeitpunkt zum Schließen des ersten Schaltelementes geeignet, bei dem der Rotorwinkel beispielsweise 260° beträgt. Aber auch eine Abweichung von +/-10° dieser Werte ergibt noch ein zufriedenstellendes Ergebnis, bei dem die Überschwinger minimiert sind. Die optimalen Zeitpunkte und dazu entsprechende Werte des Rotorwinkels für das Schließen der Schaltelemente 1-1 bis 1-3 können in Abhängigkeit des verwendeten Maschinentyps, der Drehzahl und der Temperatur ermittelt werden.

**Patentansprüche**

1. Verfahren (100) zum Umschalten aus dem Freilauf - Betriebszustand einer elektrischen Maschine (5) mit drei Phasen und mit drei Phasenanschlüssen (5-1, 5-2, 5-3) in einen Kurzschluss - Betriebszustand, mit den Schritten:

Bereitstellen (110) eines ersten Schaltelements (1-1) mit einer ersten Freilaufdiode (2-1) zwischen einem ersten Phasenanschluss (5-1) der elektrischen Maschine (5) und einem Knotenpunkt (K);
Bereitstellen (111) eines zweiten Schaltelements (1-2) mit einer zweiten Freilaufdiode (2-2) zwischen einem zweiten Phasenanschluss (5-2) der elektrischen Maschine (5) und dem Knotenpunkt (K);
Bereitstellen (112) eines dritten Schaltelements (1-3) mit einer dritten Freilaufdiode (2-3) zwischen einem dritten Phasenanschluss (5-3) der elektrischen Maschine (5) und dem Knotenpunkt (K);
Empfangen (120) einer Anforderung für ein Umschalten des Betriebszustandes der elektrischen Maschine (5) in den Kurzschluss-Betriebszustand;
Schließen der Schaltelemente (1-1, 1-2, 1-3)
**dadurch gekennzeichnet, dass**
das Schließen der einzelnen Schaltelemente (1-2, 1-3, 1-1) zumindest teilweise nacheinander erfolgt und die Zeitpunkte des Schließens der einzelnen Schaltelemente (1-2, 1-3, 1-1) in Abhängigkeit eines Ansteuerparameters der elektrischen Maschine vorgegeben werden,
wobei das Umschalten von dem Freilauf - Betriebszustand in den Kurzschluss-Betriebszustand über einen Zwischenzustand zu dem allphasigen Kurzschluss erfolgt,
wobei der Zwischenzustand ein teil-phasiger Kurzschluss ist, bei dem zunächst zwei Phasenanschlüsse (5-2, 5-3) leitend miteinander verbunden sind,
wobei bei dem allphasigen Kurzschluss alle drei Phasenanschlüsse (5-1, 5-2, 5-3) leitend miteinander verbunden sind,
wobei durch das Kurzschließen von zweien der drei Phasen sich der teilphasige Kurzschluss und damit sich ein geschlossenes schwingendes zweiphasiges System ergibt, wobei zur Bildung des zweiphasigen Systems aus einer zweiten und einer dritten Phase zum Schließen des dritten Schaltelements (1-3) in der dritten Phase ein Zeitpunkt gewählt wird, zu dem durch eine erste Phase kein Strom fließt, da die zugehörige Freilaufdiode (2-1) zu diesem Zeitpunkt sperrt.

2. Verfahren nach Anspruch 1, wobei ein Ansteuerparameter der elektrischen Maschine insbesondere ein Wert oder ein Verlauf einer elektrischen Spannung der elektrischen Maschine oder eines Rotorwinkels des Rotors der elektrischen Maschine oder eines anderen Parameters ist, anhand dessen auf einen Wert oder einen Verlauf einer elektrischen Spannung der elektrischen Maschine oder auf den Rotorwinkel des Rotors der elektrischen Maschine geschlossen werden kann.

3. Verfahren nach Anspruch 2,
wobei das dritte Schaltelement 1-3 zu einem ersten Zeitpunkt geschlossen wird, zudem der Ansteuerparameter einem Wert entspricht, der mit einem Rotorwinkel aus dem Bereich von 270° bis 90°, insbesondere 320° bis 40°, korrespondiert oder insbesondere mit einem Rotorwinkel von 0° korrespondiert.

4. Verfahren nach Anspruch 2,
wobei das zweite Schaltelement 1-2 zu einem zweiten Zeitpunkt geschlossen wird, zudem der Ansteuerparameter einem Wert entspricht, der mit einem Rotorwinkel aus dem Bereich von 270° bis 180°, insbesondere 320° bis 130°, korrespondiert oder insbesondere mit einem Rotorwinkel aus dem Bereich von 0° bis 90° korrespondiert.

5. Verfahren nach Anspruch 2,
wobei das erste Schaltelement 1-1 zu einem dritten Zeitpunkt geschlossen wird, zudem der Ansteuerparameter einem Wert entspricht, der mit einem Rotorwinkel aus dem Bereich von 0° bis 180°, insbesondere 50° bis 130°, korrespondiert oder insbesondere mit einem Rotorwinkel von 90° korrespondiert.

6. Verfahren nach Anspruch 3, 4 und 5,
wobei das zweite Schaltelement (1-2) zu einem zweiten Zeitpunkt geschlossen wird, der mit dem ersten Zeitpunkt oder mit dem dritten Zeitpunkt übereinstimmt.

7. Verfahren nach einem der Ansprüche 3 bis 6, wobei bei der Vorgabe der unterschiedlichen Zeitpunkte, bei denen die Schaltelemente (1-1) oder (1-2, 1-3) geschlossen werden, ein Wirkfaktor (cos phi) des elektrischen Antriebs oder insbesondere der elektrischen Maschine (5) berücksichtigt wird.

8. Vorrichtung zum Umschalten aus dem Freilauf - Betriebszustandes einer elektrischen Maschine (5) mit drei Phasen und mit drei Phasenanschlüssen (5-1, 5-2, 5-3) in einen Kurzschluss - Betriebszustand, mit:

einem ersten Schaltelement (1-1), das dazu ausgelegt ist, einen ersten Phasenanschluss (5-1) der elektrischen Maschine (5) mit einem Knotenpunkt (K) elektrisch zu verbinden, wobei das erste Schaltelement (1-1) eine erste Freilaufdiode (2-1) umfasst;

einem zweiten Schaltelement (1-2), das dazu ausgelegt ist, einen zweiten Phasenanschluss (5-2) der elektrischen Maschine (5) mit dem Knotenpunkt (K) elektrisch zu verbinden, wobei das zweite Schaltelement (1-2) eine zweite Freilaufdiode (2-2) umfasst;

einem dritten Schaltelement (1-3), das dazu ausgelegt ist, einen dritten Phasenanschluss (5-3) der elektrischen Maschine (5) mit dem Knotenpunkt (K) elektrisch zu verbinden, wobei das dritte Schaltelement (1-3) eine dritte Freilaufdiode (2-3) umfasst;

**dadurch gekennzeichnet, dass**

die Vorrichtung weiter aufweist eine Ansteuervorrichtung (4), die dazu ausgelegt ist, eine Anforderung (A) für ein Umschalten des Betriebszustands der elektrischen Maschine (5) in den Kurzschluss - Betriebszustand zu empfangen,

und Steuersignale zum Schließen der Schaltelemente (1-1, 1-2, 1-3) auszugeben, wobei

die Steuersignale zum Schließen der einzelnen Schaltelemente (1-2, 1-3, 1-1) zumindest teilweise nacheinander ausgegeben werden und die Zeitpunkte des Schließens der einzelnen Schaltelemente in Abhängigkeit eines Ansteuerparameters der elektrischen Maschine vorgegeben werden,

wobei das Umschalten von dem Freilauf - Betriebszustand in den Kurzschluss-Betriebszustand über einen Zwischenzustand zu dem allphasigen Kurzschluss erfolgt,

wobei der Zwischenzustand ein teil-phasiger Kurzschluss ist, bei dem zunächst zwei Phasenanschlüsse (5-2, 5-3) leitend miteinander verbunden sind,

wobei bei dem allphasigen Kurzschluss alle drei Phasenanschlüsse (5-1, 5-2, 5-3) leitend miteinander verbunden sind,

wobei durch das Kurzschließen von zweien der drei Phasen sich der teilphasige Kurzschluss und damit sich ein geschlossenes schwingendes zweiphasiges System ergibt, wobei zur Bildung des zweiphasigen Systems aus einer zweiten und einer dritten Phase zum Schließen des dritten Schaltelements (1-3) in der dritten Phase ein Zeitpunkt gewählt wird, zu dem durch eine erste Phase kein Strom fließt, da die zugehörige Freilaufdiode (2-1) zu diesem Zeitpunkt sperrt.

9. Stromrichter mit einer Vorrichtung zum Umschalten aus dem Freilauf-Betriebszustand in den Kurzschluss - Betriebszustand einer elektrischen Maschine (5) gemäß Anspruch 8.

10. Elektrisch angetriebenes Kraftfahrzeug mit einer Vorrichtung zum Umschalten aus dem Freilauf-Betriebszustand in den Kurzschluss - Betriebszustand einer elektrischen Maschine (5) gemäß Anspruch 8.

11. Computerprogramm, umfassend Befehle, die bei der Ausführung des Programms durch einen Computer diesen veranlassen, die Schritte des Verfahrens (100) nach Anspruch 1 bis 7 auszuführen.

12. Computerlesbares Speichermedium, umfassend Befehle, die bei der Ausführung durch einen Computer diesen veranlassen, die Schritte des Verfahrens (100) nach Anspruch 1 bis 7 auszuführen.

**Claims**

1. Method (100) for switching from the freewheeling operating state of an electric machine (5) having three phases and having three phase terminals (5-1, 5-2, 5-3) to a short-circuit operating state, having the steps of:

providing (110) a first switching element (1-1) with a first freewheeling diode (2-1) between a first phase terminal (5-1) of the electric machine (5) and a node (K) ;

providing (111) a second switching element (1-2) with a second freewheeling diode (2-2) between a second phase terminal (5-2) of the electric machine (5) and the node (K) ;

providing (112) a third switching element (1-3) with a third freewheeling diode (2-3) between a third phase terminal (5-3) of the electric machine (5) and the node (K) ;

receiving (120) a request for switching the operating state of the electric machine (5) to the short-circuit operating state;

closing the switching elements (1-1, 1-2, 1-3),

**characterized in that**

closing the individual switching elements (1-2, 1-3, 1-1) is effected at least partly successively and the points in time of closing the individual switching elements (1-2, 1-3, 1-1) are predefined depending on a drive parameter of the electric machine,
wherein switching from the freewheeling operating state to the short-circuit operating state takes place via an intermediate state to the all-phase short circuit,
wherein the intermediate state is a partial-phase short circuit, in which two phase terminals (5-2, 5-3) are initially conductively connected to one another,
wherein in the all-phase short circuit all three phase terminals (5-1, 5-2, 5-3) are conductively connected to one another,
wherein short-circuiting two of the three phases results in the partial-phase short circuit and therefore in a closed oscillating two-phase system, wherein in order to form the two-phase system from a second and a third phase for closing the third switching element (1-3) in the third phase, a point in time is chosen, at which no current flows through a first phase since the associated freewheeling diode (2-1) is turned off at this point in time.

2. Method according to Claim 1, wherein a drive parameter of the electric machine is in particular a value or a profile of a voltage of the electric machine or of a rotor angle of the rotor of the electric machine or of another parameter on the basis of which a value or a profile of a voltage of the electric machine or the rotor angle of the rotor of the electric machine can be deduced.

3. Method according to Claim 2,
wherein the third switching element 1-3 is closed at a first point in time, at which the drive parameter corresponds to a value which corresponds to a rotor angle from the range of 270° to 90°, in particular 320° to 40°, or corresponds in particular to a rotor angle of 0°.

4. Method according to Claim 2,
wherein the second switching element 1-2 is closed at a second point in time, at which the drive parameter corresponds to a value which corresponds to a rotor angle from the range of 270° to 180°, in particular 320° to 130°, or corresponds in particular to a rotor angle from the range of 0° to 90°.

5. Method according to Claim 2,
wherein the first switching element 1-1 is closed at a third point in time, at which the drive parameter corresponds to a value which corresponds to a rotor angle from the range of 0° to 180°, in particular 50° to 130°, or corresponds in particular to a rotor angle of 90°.

6. Method according to Claims 3, 4 and 5,
wherein the second switching element (1-2) is closed at a second point in time corresponding to the first point in time or to the third point in time.

7. Method according to one of Claims 3 to 6, wherein a power factor (cos phi) of the electric drive or in particular of the electric machine (5) is taken into account in the predefinition of the different points in time at which the switching elements (1-1) or (1-2, 1-3) are closed.

8. Device for switching from the freewheeling operating state of an electric machine (5) having three phases and having three phase terminals (5-1, 5-2, 5-3) to a short-circuit operating state, having:

a first switching element (1-1), which is designed to electrically connect a first phase terminal (5-1) of the electric machine (5) to a node (K), wherein the first switching element (1-1) comprises a first freewheeling diode (2-1);
a second switching element (1-2), which is designed to electrically connect a second phase terminal (5-2) of the electric machine (5) to the node (K), wherein the second switching element (1-2) comprises a second freewheeling diode (2-2);
a third switching element (1-3), which is designed to electrically connect a third phase terminal (5-3) of the electric machine (5) to the node (K), wherein the third switching element (1-3) comprises a third freewheeling diode (2-3) ;
**characterized in that**
the device further has a drive device (4), which is designed to receive a request (A) for switching the operating state of the electric machine (5) to the short-circuit operating state,
and to output control signals for closing the switching elements (1-1, 1-2, 1-3),
wherein
the control signals for closing the individual switching elements (1-2, 1-3, 1-1) are output at least partly successively and the points in time of closing the individual switching elements are predefined depending on a drive parameter of the electric machine,

wherein switching from the freewheeling operating state to the short-circuit operating state takes place via an intermediate state to the all-phase short circuit,

wherein the intermediate state is a partial-phase short circuit, in which two phase terminals (5-2, 5-3) are initially conductively connected to one another,

wherein in the all-phase short circuit all three phase terminals (5-1, 5-2, 5-3) are conductively connected to one another,

wherein short-circuiting two of the three phases results in the partial-phase short circuit and therefore in a closed oscillating two-phase system, wherein in order to form the two-phase system from a second and a third phase for closing the third switching element (1-3) in the third phase, a point in time is chosen, at which no current flows through a first phase since the associated freewheeling diode (2-1) is turned off at this point in time.

9. Power converter having a device for switching from the freewheeling operating state to the short-circuit operating state of an electric machine (5) according to Claim 8.

10. Electrically driven motor vehicle having a device for switching from the freewheeling operating state to the short-circuit operating state of an electric machine (5) according to Claim 8.

11. Computer program, comprising commands, which when the program is executed by a computer cause the latter to perform the steps of the method (100) according to Claims 1 to 7.

12. Computer-readable storage medium, comprising commands, which when executed by a computer cause the latter to perform the steps of the method (100) according to Claims 1 to 7.

**Revendications**

1. Procédé (100) permettant de commuter de l'état de fonctionnement en circuit ouvert d'une machine électrique (5) à trois phases et pourvue de trois bornes de phase (5-1, 5-2, 5-3) à un état de fonctionnement en court-circuit, comprenant les étapes consistant à :

fournir (110) un premier élément de commutation (1-1) pourvu d'une première diode de roue libre (2-1) entre une première borne de phase (5-1) de la machine électrique (5) et un noeud (K) ;
fournir (111) un deuxième élément de commutation (1-2) pourvu d'une deuxième diode de roue libre (2-2) entre une deuxième borne de phase (5-2) de la machine électrique (5) et le noeud (K) ;
fournir (112) un troisième élément de commutation (1-3) pourvu d'une troisième diode de roue libre (2-3) entre une troisième borne de phase (5-3) de la machine électrique (5) et le noeud (K) ;
recevoir (120) une demande de commutation de l'état de fonctionnement de la machine électrique (5) à l'état de fonctionnement en court-circuit ;
fermer les éléments de commutation (1-1, 1-2, 1-3),
**caractérisé en ce que**
la fermeture des éléments de commutation (1-2, 1-3, 1-1) individuels est effectuée au moins en partie les uns après les autres, et les instants de la fermeture des éléments de commutation (1-2, 1-3, 1-1) individuels sont prédéfinis en fonction d'un paramètre d'excitation de la machine électrique,
dans lequel la commutation de l'état de fonctionnement en circuit ouvert à l'état de fonctionnement en court-circuit est effectuée en passant par un état intermédiaire jusqu'au court-circuit sur toutes les phases,
dans lequel l'état intermédiaire est un court-circuit sur une partie des phases dans lequel d'abord deux bornes de phase (5-2, 5-3) sont reliées ensemble de manière conductrice,
dans lequel l'ensemble des trois bornes de phase (5-1, 5-2, 5-3) est relié ensemble de manière conductrice pour le court-circuit sur toutes les phases,
dans lequel la mise en court-circuit de deux des trois phases aboutit à un court-circuit sur une partie des phases et donc à un système oscillant fermé à deux phases, dans lequel, pour former le système à deux phases à partir d'une deuxième et d'une troisième phase, on choisit pour la fermeture du troisième élément de commutation (1-3) dans la troisième phase un instant auquel aucun courant ne passe par une première phase étant donné que la diode de roue libre (2-1) associée bloque à cet instant.

2. Procédé selon la revendication 1, dans lequel un paramètre d'excitation de la machine électrique est en particulier une valeur ou une allure d'une tension électrique de la machine électrique ou d'un angle de rotor du rotor de la machine électrique ou d'un autre paramètre, qui permet de déduire une valeur ou une allure d'une tension électrique de la machine électrique ou l'angle de rotor du rotor de la machine électrique.

3. Procédé selon la revendication 2, dans lequel le troisième élément de commutation 1-3 est fermé à un premier instant auquel le paramètre d'excitation correspond à une valeur qui correspond à un angle de rotor de la plage de 270° à 90°, en particulier de 320° à 40°, ou correspond en particulier à un angle de rotor de 0°.

4. Procédé selon la revendication 2, dans lequel le deuxième élément de commutation 1-2 est fermé à un deuxième instant auquel le paramètre d'excitation correspond à une valeur qui correspond à un angle de rotor de la plage de 270° à 180°, en particulier de 320° à 130°, ou correspond en particulier à un angle de rotor de la plage de 0° à 90°.

5. Procédé selon la revendication 2, dans lequel le premier élément de commutation 1-1 est fermé à un troisième instant auquel le paramètre d'excitation correspond à une valeur qui correspond à un angle de rotor de la plage de 0° à 180°, en particulier de 50° à 130°, ou correspond en particulier à un angle de rotor de 90°.

6. Procédé selon les revendications 3, 4 et 5, dans lequel le deuxième élément de commutation (1-2) est fermé à un deuxième instant qui coïncide avec le premier instant ou avec le troisième instant.

7. Procédé selon l'une quelconque des revendications 3 à 6, dans lequel, lors de la prédéfinition des différents instants auxquels les éléments de commutation (1-1) ou (1-2, 1-3) sont fermés, un facteur d'efficience (cos phi) de l'entraînement électrique ou en particulier de la machine électrique (5) est pris en compte.

8. Dispositif permettant de commuter de l'état de fonctionnement en circuit ouvert d'une machine électrique (5) à trois phases et pourvue de trois bornes de phase (5-1, 5-2, 5-3) à un état de fonctionnement en court-circuit, comprenant :

   un premier élément de commutation (1-1) qui est conçu pour relier électriquement une première borne de phase (5-1) de la machine électrique (5) à un noeud (K), le premier élément de commutation (1-1) comprenant une première diode de roue libre (2-1) ;
   un deuxième élément de commutation (1-2) qui est conçu pour relier électriquement une deuxième borne de phase (5-2) de la machine électrique (5) au noeud (F), le deuxième élément de commutation (1-2) comprenant une deuxième diode de roue libre (2-2) ;
   un troisième élément de commutation (1-3) qui est conçu pour relier électriquement une troisième borne de phase (5-3) de la machine électrique (5) au noeud (K), le troisième élément de commutation (1-3) comprenant une troisième diode de roue libre (2-3) ;
   **caractérisé en ce que**
   le dispositif présente en outre un dispositif d'excitation (4) qui est conçu pour recevoir une demande (A) de commutation de l'état de fonctionnement de la machine électrique (5) à l'état de fonctionnement en court-circuit et pour sortir des signaux de commande pour la fermeture des éléments de commutation (1-1, 1-2, 1-3),
   dans lequel les signaux de commande pour la fermeture des éléments de commutation (1-2, 1-3, 1-1) individuels sont sortis au moins partiellement les uns après les autres, et les instants de la fermeture des éléments de commutation individuels sont prédéfinis en fonction d'un paramètre d'excitation de la machine électrique,
   dans lequel la commutation de l'état de fonctionnement en circuit ouvert à l'état de fonctionnement en court-circuit est effectuée en passant par un état intermédiaire jusqu'au court-circuit sur toutes les phases,
   dans lequel l'état intermédiaire est un court-circuit sur une partie des phases, dans lequel d'abord deux bornes de phase (5-2, 5-3) sont reliées ensemble de manière conductrice,
   dans lequel, pour le court-circuit sur toutes les phases, l'ensemble des trois bornes de phase (5-1, 5-2, 5-3) est relié ensemble de manière conductrice,
   dans lequel la mise en court-circuit de deux des trois phases aboutit à un court-circuit sur une partie des phases et donc à un système oscillant fermé à deux phases, dans lequel, pour former le système à deux phases à partir d'une deuxième et d'une troisième phase, on choisit pour la fermeture du troisième élément de commutation (1-3) dans la troisième phase un instant auquel aucun courant ne passe par une première phase étant donné que la diode de roue libre (2-1) associée bloque à cet instant.

9. Convertisseur de courant, comprenant un dispositif de commutation de l'état de fonctionnement en circuit ouvert à l'état de fonctionnement en court-circuit d'une machine électrique (5) selon la revendication 8.

10. Véhicule automobile électrique, comprenant un dispositif de commutation de l'état de fonctionnement en circuit ouvert à l'état de fonctionnement en court-circuit d'une machine électrique (5) selon la revendication 8.

**11.** Programme informatique, comprenant des instructions qui, lorsque le programme est exécuté par un ordinateur, amènent celui-ci à exécuter les étapes du procédé (100) selon les revendications 1 à 7.

**12.** Support de stockage lisible par ordinateur, comprenant des instructions qui, lorsqu'elles sont exécutées par un ordinateur, amènent celui-ci à exécuter les étapes du procédé (100) selon les revendications 1 à 7.

# Fig. 1

# Fig. 2

Fig. 3

EP 3 213 401 B1

# Fig. 4

100

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011081173 A1
- DE 102011086079 A1
- DE 102011017712 A1
- DE 102012101508 A1